# EUROPÄISCHE PATENTANMELDUNG

(11) **EP 4 099 526 A1**
(43) Veröffentlichungstag der Anmeldung: **07.12.2022**
(21) Anmeldenummer: 22176874.0
(22) Anmeldetag: 01.06.2022
(51) Int. Cl.: H02G 1/08, G02B 6/44, F16L 55/38

(54) **EINBLASSYSTEM MIT EINER EINBLASVORRICHTUNG**

(30) Priorität: 04.06.2021 DE 102021003043
(71) Anmelder: Bär, Brigitte, 74235 Erlenbach (DE)
(72) Erfinder: Bär, Manfred, 74235 Erlenbach (DE)
(74) Vertreter: Wimmer, Stephan

(57) **Zusammenfassung**

Vorgeschlagen wird ein Einblassystem (200), aufweisend eine Einblasvorrichtung (100) mit einem Einblasadapter (7), wobei mindestens zwei Turbinenräder (4) mit jeweils einem Antrieb angeordnet sind, die zum Antrieb mindestens eines Kabels (10) ausgebildet sind.

## Beschreibung

Die Erfindung betrifft ein Einblassystem mit einer Einblasvorrichtung für Kabel.

### Stand der Technik

Kabel, insbesondere für die Nachrichten- und Datenübermittlung, werden in vorher installierten Kabelschutzrohren verlegt. Dies erfolgt beispielsweise unter dem Einsatz von Kabeleinblasmaschinen. Dies sind Spezialmaschinen zum Verlegen beispielsweise von Lichtwellenleitern in Schutzrohren von Kabeln unter Verwendung von Druckluft oder Wasser. Das Kabeleinblasverfahren ist gegenüber dem Einziehen von Kabeln kostengünstiger, und es wirken weniger Zugkräfte auf das Kabel. Zum Einblasen mit Druckluft wird an der Kabelspitze beispielsweise ein Manschettenkolben befestigt. Kabeleinblasmaschinen bzw. -geräte eignen sich besonders für das Verlegen von Glasfaserkabeln, die sich aufgrund ihres geringen Gewichts besonders gut mittels Druckluft einblasen lassen.

Ein Einblasgerät weist üblicherweise ein Kopfstück auf, das die sichere Befestigung des Schutzrohrs, in das dieses Kabel eingeblasen wird, und die Zufuhr von Luftdruck zu diesem Rohr ermöglicht. Das Kabel wird über das Kopfstück und mehrere Dichtungen in das Leerrohr eingeführt. Des Weiteren sind ein Kabelgeber der das Kabel zum Kopfstück vorgibt; eine Grundplatte, auf der die einzelnen Teile des Einblasgerätes aufgebaut sind; eine Kabelführung, in der das Kabel mithilfe von Hülsen bzw. Schubeinrichtungen zum Kopfstück geführt wird; ein Druckluftanschluss für die sichere und gefahrlose Zufuhr von Druckluft zum Einblasgerät; sowie ein Zähler, der die Gesamtlänge des eingeblasenen Kabels anzeigt und eine Kabel-Steuereinheit, mit der die Geschwindigkeit des einzuschiebenden Kabels und die Anpresskraft des Kabelgebers kontrolliert wird, angeordnet.

Die EP 0 427 354 A2 offenbart eine Kabeleinblasmaschine mit einer Einblasdüse, die einen als Kabeldurchlass dienenden durchgehenden koaxialen Kanal aufweist und die Einblasdüse durch zwei Halbschalen gebildet werden, die sich auseinandernehmen lassen, um den Zugang zu dem Kabeldurchlass zu ermöglichen, so dass ein Endloskabel in die Düse eingelegt werden kann. Von einem seitlich an der Einblasdüse angeordneten Druckluftanschluss geht ein Druckluftkanal aus, der zum vorderen Ende der Düse führt und sich spätestens dort mit dem Kabeldurchlass vereinigt, so dass die Druckluft axial nach vorne in das Rohr einströmt, in welches das Kabel eingeblasen werden soll. Hinter der Einblasdüse ist ein Transportrollensatz angeordnet, mit dem das Kabel während des Einblasvorgangs zwangsweise der Einblasdüse zugeführt wird.

Nachteilig an den bekannten Kabeleinblasgeräten ist, dass eine hohe Druckluftqualität zur Verfügung stehen muss und hohe Schubkräfte zur Verlegung der Kabel erzeugt werden müssen. Insbesondere für unterirdische Installationen werden Kompressoren mit ölfreier Druckluft und Nachkühler eingesetzt. Es wird kein Molch vor das Kabel gesetzt. Dadurch wird im Rohr ein enormer Rückwärtsdruck erzeugt, der durch eine aufwändig zu erzeugende hohe Schubkraft überwunden werden muss. Die Vorschubkraft muss also durch teure Druckluftmotoren oder beim Kurzlängenbereich durch Akkuschrauber erzeugt werden. Eventuelle Kabelbeschädigungen sind nur durch aufwändige Technik, beispielsweise den Einsatz von Protokolliergeräten, zu begrenzen. Die bekannten Kabeleinblasgeräte für Gebäudeinstallationen weisen ein relativ hohes Gewicht, auch ohne Akkuschrauber, auf. Wegen der starken Vorschubkraft müssen vor dem Einblasen für jeden Kabeltyp ein Crash-Test nach Telekom ziv40 durchgeführt werden.

Aufgabe der Erfindung ist es daher, eine Einblasvorrichtung zur Verfügung zu stellen, die eine einfache Möglichkeit zur Verlegung von Kabeln, insbesondere, ohne das Zurverfügungstellen von hohen Schubkräften ermöglicht.

### Offenbarung der Erfindung

Die Erfindung wird durch die Merkmale des Hauptanspruchs offenbart. Ausführungsformen und Weiterbildungen sind Gegenstand der sich an den Hauptanspruch anschließenden weiteren Ansprüche.

Es wird eine Einblasvorrichtung eines Einblassystems offenbart, die freihängend an einem Rohrende, beispielsweise einer Wand, anordenbar ist. Die Einblasvorrichtung ist in Leichtbauweise hergestellt Die Einblasvorrichtung weist einen Antrieb auf. Dieser Antrieb ist insbesondere ein Turbinenantrieb. Dies hat zur Folge, dass dadurch keine besondere Druckluftqualität für die Druckluftmotoren mehr notwendig ist, beispielsweise durch aufbereitete Luft.

Die Einblasvorrichtung kann direkt an einem installierten Rohrende befestigt werden, wodurch bei einseitig vorkonfektionierten Kabeln kein Hilfsrohr mehr eingesetzt bzw. getrennt werden muss. Daher ist die Einblasvorrichtung in Leichtbauweise mit dem erfindungsgemäßen Antrieb ausgebildet. Wenn eine relativ schwere Einblasmaschine, also ca. über 1 kg, am Rohrende befestigt wäre, würde das Rohr knicken und unbrauchbar werden. Eine leichtgängige Trommelachse hat ein spezielles Gleitlager, das eine Nachlaufdrosselung bewirkt.

Zum Antrieb der Einblasvorrichtung können handelsübliche Handwerker-Kompressoren für Gebäude eingesetzt werden, deren Leistung zum Antrieb ausreicht. Sollte das einzublasende Kabel wegen eines eventuellen Hindernisses stoppen, so stoppt sofort der Vortrieb durch die angeordneten Turbinenräder. Da das Kabel nicht mehr weiter in das Einblasrohr eingebracht wird, blockiert das Vortriebsrad. Dieses ist mechanisch über das Zahnrad und Schneckenrad mit den Turbinenschaufeln gekoppelt. Aufgrund einer hohen Untersetzung zwischen Turbine und Vortriebsrad wirkt das blockierte Kabel wie eine starke Kraft dem Drehmoment und damit der weiteren Rotation der Turbine entgegen. Die durch die Düsen auf die einzelnen Turbinenschaufeln aufgebrachte Luft kann die Turbine nicht mehr in Rotation versetzen und strömt durch die Schaufelkaskade und Bohrungen unterhalb der Turbinenschaufeln. Danach verlässt die Luft die Einblasvorrichtung durch eine Entlüftung. Die dadurch erzielte Entkopplung unter Verwendung der aerodynamischen Kräfte ermöglicht den Stopp bei geringem Widerstand. Somit wird die Wahrscheinlichkeit einer Kabelbeschädigung nahezu ausgeschlossen. Das Kabeleinblassystem mit der erfindungsgemäßen Einblasvorrichtung eignet sich ebenfalls für das Einblasen von dünnen Glasfaserkabeln mit einem Durchmesser von ca. 1 mm.

Die Antriebsräder für den Kabelvorschub weisen einen weichen, insbesondere gummiartigen Belag auf. Die Antriebsräder sind daher bei einem geringen Anpressdruck bereits griffig.

Zum Einblasen wird ein Molch vor dem Kabel verwendet. In einem Ausführungsbeispiel weist der Molch eine besondere Kontur und bestimmte Eigenschaften auf. Der Molch ist aus einem gummiartigen oder gummiähnlichen Material und auch mit einer Luftkammer ausgebildet. Für Kurzlängen ist kein Molch notwendig.

Die erfindungsgemäße Einblasvorrichtung hat dabei den Vorteil, dass kein Hilfsrohr benötigt wird und eine Beschädigung des einzublasenden Kabels ausgeschlossen wird.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1: zeigt den Aufbau und die Anordnung einer Einblasvorrichtung,
- Fig. 2: zeigt die Ausgestaltung eines Molchs, und
- Fig. 3: stellt eine Anordnung für die Unterputz-Verlegung in einem Gebäude dar.

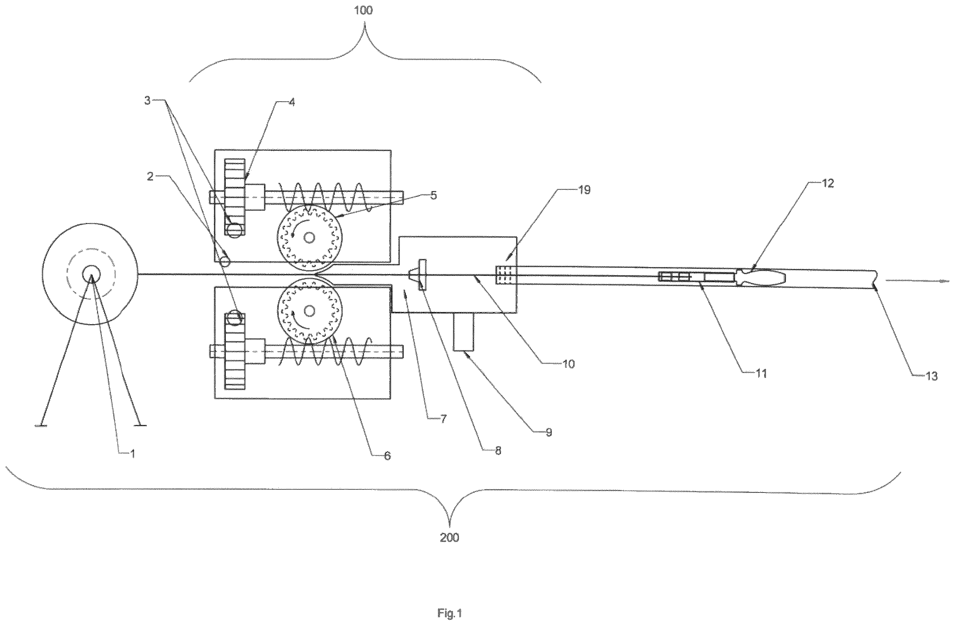

In Fig. 1 ist der Aufbau und die Anordnung einer Einblasvorrichtung 100 eines Einblassystems 200 dargestellt. Ein Achslager 1 ist als Gleitlager ausgebildet. Diese Ausbildung verhindert einen starken Nachlaufeffekt bei einem eventuellen Stopp während des Einblasens eines Kabels in ein Kabelrohr. Die Einblasvorrichtung 100 weist einen Drehpunkt 2 auf, um das von der Kabeltrommel abzuwickelnde Kabel seitlich einlegen zu können.

Es sind Luftanstrahlpunkte 3 bzw. Düsen an Turbinenrädern 4 ausgebildet. Die Turbinenräder 4 weisen ein Schneckenrad auf. Die Turbinenräder 4 werden angeblasen. Diese wirken auf das Schneckenrad. Dieses Schneckenrad treibt ein Zahnrad 5 an und setzt es in Bewegung. Um das Zahnrad 5 ist eine Antriebsrolle 6 angeordnet. Das Zahnrad 5 wirkt auf diese Antriebsrolle 6. Diese Antriebsrolle 6 weist einen Belag auf, der so ausgebildet ist, dass er eine optimale Förderleistung erbringt. Dieser Belag kann aus Gummi bzw. einem gummiartigen Belag ausgebildet sein. Die Antriebsrolle 6 mit dem Belag liegt am Schneckenrad an und dies wird durch die Krafteinwirkung des Zahnrads 5 gedreht, wobei die Turbinenräder 4 über die Schneckenräder die Zahnräder 5 mit den Antriebsrollen 6 bewegen.

Des Weiteren ist ein Einblasadapter 7 angeordnet. Der Einblasadapter 7 ist geteilt ausgebildet. Das Kabel wird durch eine Nutringabdichtung 8 geführt. Die Nutringabdichtung 8 weist in einem Ausführungsbeispiel einen Schmutzabstreifer auf. Die Nutringabdichtung 8 ist dabei einseitig, schräg und getrennt ausgebildet.

Am Einblasadapter 7 ist ein Druckluftanschluss 9 für ein Kabelrohr angeordnet. Es ist eine Trapeznut 10 ausgebildet. Diese Trapeznut 10 dient der Abdichtung der beiden Hälften des Einblasadapters 7. Es ist eine Verbindung mit einem Schrumpfschlauch 11 oder einer Metallhülse zu einem Molch 12 ausgebildet. Der Molch 12 ist aus einem gummiähnlichen Material ausgebildet und lässt sich zusammendrücken. Der Molch 12 weist eine Luftkammer auf. Der Molch 12 mit dem einzubringenden Kabel ist in einem Kabelrohr 13 angeordnet. Das Kabelrohr 13 kann unterschiedliche Durchmesser aufweisen, beispielsweise 7 x 1,5 mm.

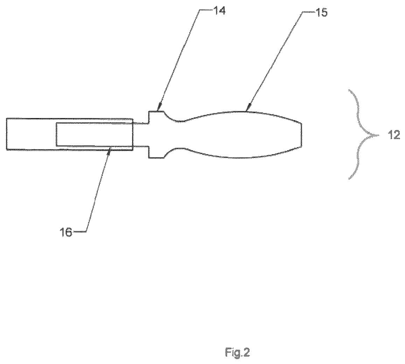

Fig. 2 zeigt die Ausbildung des Molchs 12. Der Molch 12 weist eine Dichtlippe 14 auf. Diese lässt sich stark zusammendrücken. Der Molch 12 hat einen Ballonkörper 15. Dieser Ballonkörper 15 ist hohl und lässt sich ebenso stark zusammendrücken. Es ist ein Verbindungsschaft 16 ausgebildet, welcher der Verbindung des Molchs 12 mit dem Kabel dient. In einem Ausführungsbeispiel ist eine Schrumfpffläche ausgebildet.

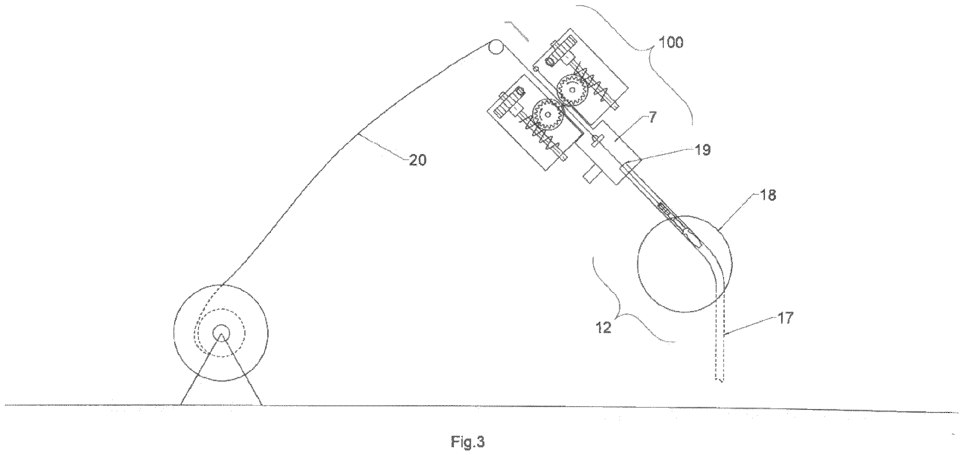

Fig. 3 stellt die Anordnung der Einblasvorrichtung 100 sowie des Molchs 12 dar. Es wird ein in einem Gebäude verlegtes Unterputzrohr 17 dargestellt. Das Unterputzrohr 17 kann eine Bemaßung des Durchmessers von beispielsweise von 7 x 1,5 mm aufweisen. Des Weiteren ist eine Abzweigdose 18 durch die Markierung mit einem Kreis dargestellt. Der Einblasadapter 7 ist an einem Anschluss 19 bzw. einer Rohrabfangung mit dem umgekehrten Prinzip wie eine Schlauchtülle angeordnet und hängt frei an einem Rohrende bzw. an der kompletten Einblasvorrichtung 100. Durch die gezeigte Anordnung wird ein Kabel 20 in das Unterputzrohr 17 eingeblasen.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszeichenliste

- 1: Kabeltrommel Achslager
- 2: Drehpunkt
- 3: Luftanstrahlpunkt
- 4: Turbinenrad
- 5: Zahnrad
- 6: Antriebsrolle
- 7: Einblasadapter
- 8: Nutringabdichtung
- 9: Druckluftanschluss
- 10: Trapeznut
- 11: Schrumpfschlauch
- 12: Molch
- 13: Kabelrohr
- 14: Dichtlippe
- 15: Ballonkörper
- 16: Verbindungsschaft
- 17: Unterputzrohr
- 18: Abzweigdose
- 19: Anschluss
- 20: Kabel

- 100: Einblasvorrichtung
- 200: Einblassystem

## Patentansprüche

1. Einblassystem (200), aufweisend eine Einblasvorrichtung (100) mit einem Einblasadapter (7), **dadurch gekennzeichnet, dass** mindestens zwei Turbinenräder (4) mit jeweils einem Antrieb angeordnet sind, die zum Antrieb mindestens eines Kabels (10) ausgebildet sind.

2. Einblassystem (200) nach Anspruch 1, **dadurch gekennzeichnet, dass** das Einblassystem (200) einen Molch (12) aufweist, der über eine Verbindung (11) mit dem Kabel (10) verbunden ist.

3. Einblassystem (200) nach Anspruch 2, **dadurch gekennzeichnet, dass** die Verbindung (11) als Schrumpfschlauch- oder Gewinde-Verbindung ausgebildet ist.

4. Einblassystem (200) nach einem der Ansprüche 2 oder 3, **dadurch gekennzeichnet, dass** der Molch (12) einen hohlen Ballonkörper (15) und eine Dichtlippe (14) aufweist, die zusammendrückbar ausgebildet sind.

5. Einblassystem (200) nach einem der Ansprüche 2 bis 4, **dadurch gekennzeichnet, dass** der Molch (12) einen Verbindungsschaft (16) aufweist, der als Schrumpffläche ausgebildet ist.

6. Einblassystem (200) nach einem der vorhergehenden Ansprüche, **dadurch gekennzeichnet, dass** die Einblasvorrichtung (100) einen Einblasadapter (7) aufweist, der geteilt zur Kabeldurchführung ausgebildet ist.

7. Einblassystem (200) nach Anspruch 6, **dadurch gekennzeichnet, dass** innerhalb des Einblasadapters (7) eine Nutringabdichtung (8) mit einem Schmutzabstreifer angeordnet ist, durch die das Kabel (10) geführt ist.

8. Einblassystem (200) nach einem der Ansprüche 6 oder 7, **dadurch gekennzeichnet, dass** ein Anschluss des Einblasadapters (7) frei an einem Rohrende oder an der Einblasvorrichtung (100) angeordnet ist.

9. Einblassystem (200) nach einem der vorhergehenden Ansprüche 6 bis 8, **dadurch gekennzeichnet, dass** der Einblasadapter (7) einen Druckluftanschluss (9) für ein Kabelrohr aufweist.

10. Einblassystem (200) nach einem der vorhergehenden Ansprüche, **dadurch gekennzeichnet, dass** das Turbinenrad (4) über ein Zahnrad (5) mit einem Vortriebsrad eine Kraft auf das Kabel (10) weitergibt.

11. Einblassystem (200) nach einem der vorhergehenden Ansprüche, **dadurch gekennzeichnet, dass** die Einblasvorrichtung (100) einen Drehpunkt (2) aufweist, um das Kabel (10) seitlich einlegen zu können.

12. Einblassystem (200) nach einem der vorhergehenden Ansprüche, **dadurch gekennzeichnet, dass** die Einblasvorrichtung (100) einen Luftanstrahlpunkt (3) aufweist.

13. Einblassystem (200) nach einem der vorhergehenden Ansprüche, **dadurch gekennzeichnet, dass** ein Achslager (1) angeordnet ist, das als Gleitlager ausgebildet ist, wodurch ein starker Nachlaufeffekt beim Einblasen des Kabels (10) in ein Kabelrohr vermieden wird.
